# EUROPEAN PATENT SPECIFICATION

(11) **EP 2 961 125 B1**
(45) Date of publication and mention of the grant of the patent: **13.12.2017**
(21) Application number: 14305976.4
(22) Date of filing: 23.06.2014
(51) Int. Cl.: H04L 29/08, H04L 29/06

(54) **Method for enhancing captive portal service**
Verfahren zur Verbesserung eines firmeneigenen Dienstportals
Procédé d'amélioration de service de portail captif

(43) Date of publication of application: 30.12.2015
(73) Proprietor: Alcatel Lucent, 92100 Boulogne-Billancourt (FR)
(72) Inventor: PRASAD, Nagendra, 560045 BANGALORE (IN)
(74) Representative: Mouney, Jérôme

(56) References cited:
- US-A1- 2013 347 073
- "Internal Captive Portal Creating a New Internal Web Page", , 6 July 2013 (2013-07-06), pages 1-11, XP055142545, Internet Retrieved from the Internet: URL:http://www.arubanetworks.com/techdocs/ ArubaOS_61/ArubaOS_61_UG/Internal_Captive_ Portal.php [retrieved on 2014-09-25]
- A Barth: "HTTP State Management Mechanism", , 30 April 2011 (2011-04-30), pages 1-37, XP055142551, Internet: Internet Engineering Task Force (IETF) Retrieved from the Internet: URL:https://datatracker.ietf.org/doc/rfc62 65/?include_text=1 [retrieved on 2014-09-25]

## Description

### FIELD OF THE INVENTION

The present invention pertains to a method for enhancing captive portal service provided by a control entity to a communication device.

### BACKGROUND

Captive portal is a web based authentication mechanism which is enforced on the user who is classified into an edge profile for which the captive portal is enabled.

As of now upon captive portal successful authentication the status page is displayed indicating that login is successful and the pending session time and the logout button. After successful authentication the MAC (Media Access Control) of the user will be associated with a role (the access privileges) that offers him/her unrestricted access to the resource.

It also contains the captive portal URL (Uniform Resource Locator) which the end user can store in the favorites if he intends to access at a later point of time to logout or to view the status.

The current implementation has the following two drawbacks:
- if success redirect URL is configured on the entity managing the captive portal, then instead of the status page the user is redirected to the configured success redirect URL. Thus, the user can not store the status page URL which he can use later for logout or to view the status.
- there is no possibility to redirect the user to the original URL he wanted to access upon successful authentication.

There is a need for a simple solution to help the user to access quickly to desired URLs. US 2013/347073 is considered to be a relevant prior art that discloses a system for authorizing a client device to securely access a hotspot that includes a captive portal service to establish an encrypted connection between the client device and the hotspot.

### SUMMARY

The invention is defined by the independent claims 1, 2 and 4. This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for enhancing a captive portal service provided by a control entity to a communication device, comprising the following steps in the control entity:
after authentication of a user of the communication device, sending a status page about the captive portal to the communication device for a display of the status page in one tab of the browser, the status page containing a cookie that commands a browser in the communication device to make a request for a success redirect URL and an initial requested URL for a display of the two web pages in two other different tabs of the browser.

Advantageously, the user has access seamlessly to the status page, the success redirect page and the initial requested page.

The invention also pertains to a control entity for enhancing a captive portal service provided by a control entity to a communication device, comprising:
means for sending, after authentication of a user of the communication device, a status page about the captive portal to the communication device for a display of the status page in one tab of the browser, the status page containing a cookie that commands a browser in the communication device to make a request for a success redirect URL and an initial requested URL for a display of the two web pages in two other different tabs of the browse.

In an embodiment, the control entity is one of server, a router and a switch.

The invention also pertains to computer program capable of being implemented within a control entity, said program comprising instructions which, when the program is executed within said control entity, carry out steps according to the method according to the invention.

### BRIEF DESCRIPTION OF THE FIGURES

Some embodiments of the present invention are now described, by way of example only, and with reference to the accompanying drawings. The same reference number represents the same element or the same type of element on all drawings.
FIG. 1 is a schematic block diagram of a communication system according to one embodiment of the invention for enhancing captive portal service.
FIG. 2 is a flow chart illustrating a method for enhancing captive portal service according to one embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

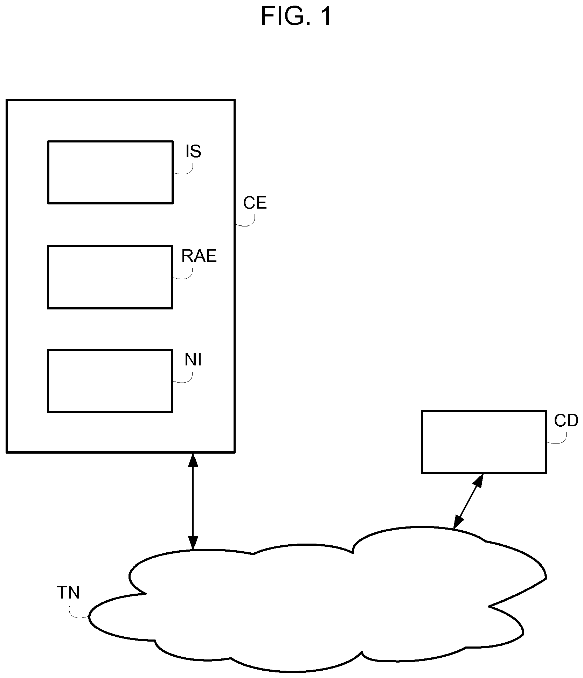

Referring to FIG. 1, a communication system comprises a control entity CE and a communication device CD which are able to communicate between them through at least a telecommunication network TN.

The telecommunication network TN may be a wired or wireless network, or a combination of wired and wireless networks.

The telecommunication network TN can be associated with a packet network, for example, an IP ("Internet Protocol") high-speed network such as the Internet or an intranet, or even a company-specific private network.

The communication device CD can be a personal computer or a laptop, a tablet, a smart phone, a phablet, for instance. More generally it concerns any type of electronic equipment comprising a communication module, capable of establishing connection with the telecommunication network to exchange data with other communication equipments.

The control entity CE is a network entity that is able to communicate with the communication device CD and that allows access to a service, like access to Internet, requiring user authentication. The control entity CE manages a database containing user identifiers and user profiles. For example, the control entity can be implemented in a server or router or switch.

The control entity CE comprises a network interface NI to communicate with the communication device, an authentication server, like a Radius Server, an intranet server and servers in the network.

The control entity CE comprises role assignment engine RAE that implements a captive portal technique that forces an HTTP client to see a special web page, for authentication purposes.

The control entity CE comprises an internal server IS that manages URLs requested by devices communicating with the control entity.

In one embodiment, the internal server IS is implemented in an entity independent from the control entity CE.

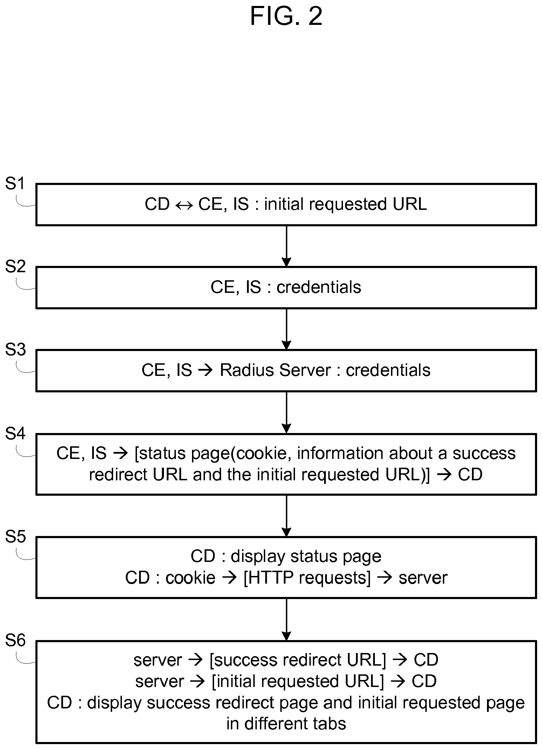

With reference to FIG. 2, a method for handling passwords for service authentication according to one embodiment of the invention comprises steps S1 to S6 executed within the communication system.

In step S1, the user of the communication device CD connects to the control entity CE in order to get access to Internet, to a web site for example.

When the user opens a web browser trying to access a web site, the role assignment engine RAE of the control entity CE triggers a captive portal pre-login role that traps packets, such as HTTP/HTTPS/HTTP PROXY packets, into an internal server IS.

The user is classified in an edge profile for which captive portal property is enabled. The user's MAC address is learnt with captive portal pre-login role (restricted access privileges). The pre-login role enables trapping of the HTTP packets to the internal server IS running on the control entity CE.

When the initial HTTP request comes from the communication device of user, the internal server retrieves an initial requested URL included in the HTTP request accessed and stores the initial requested URL.

In step S2, the internal server IS sends the captive portal login page to the communication device of the user, asking for credentials.

The user enters the credentials, such as user name and password, in the login page and submits the entered credentials that are sent from the communication device to the internal server IS.

In step S3, the internal server IS forwards the credentials to the control entity CE.

The control entity CE authenticates the user with collaboration with the Radius Server.

In step S4, if the authentication is successful, the internal server IS in the control entity CE produces a HTTP response which contains a status page about the captive portal to the communication device of the user.

The HTTP response contains a cookie describing information about a success redirect URL and the initial requested URL, that was previously stored. The cookie commands the browser in the communication device to make a request to the control entity CE to get the success redirect URL and the initial requested URL.

The control entity CE sends the HTTP response to the communication device of the user.

In step S5, when the HTTP response is received by the communication device, the browser displays the captive portal status page on one tab. The cookie initiates HTTP requests for the success redirect URL and the initial requested URL to servers hosting these respective URLs.

The communication device sends two requests based on the content of the cookie, one request for the success redirect URL to the server hosting the success redirect URL and one request for the initial requested URL to the server hosting the initial requested URL.

In step S6, the server hosting the initial requested URL sends a response with a web page corresponding to the initial requested URL to the communication device. Also the server hosting the success redirect URL sends a response with a web page corresponding to the success redirect URL to the communication device

The browser displays the web page corresponding to success redirect URL and the web page corresponding to the initial requested URL each in a new tab.

Finally, with the cookie included in the HTTP response sent from the control entity in step S4, the browser of the communication device is able to automatically display of all three following URLs by making use of the multi tab support of the browser:
1. Status Page
2. Initial URL request by the user
3. Success Redirect URL configured on the control entity

The invention described here relates to a method and a control entity for enhancing captive portal service. According to one implementation of the invention, steps of the invention are determined by the instructions of a computer program incorporated into a control entity, such as the control entity CE. The program comprises program instructions which, when said program is loaded and executed within the control entity, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for enhancing a captive portal service provided by a control entity (CE) to a communication device (CD), comprising the following steps in the control entity (CE):
after authentication of a user of the communication device, sending (S4) a status page about the captive portal to the communication device for a display of the status page in one tab of the browser, the status page containing a cookie, describing information about a success redirect URL and an initial requested URL, based on the content of which a browser in the communication device sends a request for the success redirect URL and the initial requested URL (S5) for a display of the web page corresponding to success redirect URL and the web page corresponding to the initial requested URL each in another tab of the browser (S6).

2. A control entity (CE) for enhancing a captive portal service provided by a control entity (CE) to a communication device (CD), comprising:
means (IS) for sending, after authentication of a user of the communication device, a status page about the captive portal to the communication device for a display of the status page in one tab of the browser, the status page containing a cookie, describing information about a success redirect URL and an initial requested URL, based on the content of which a browser in the communication device sends a request for the success redirect URL and the initial requested URL for a display of the web page corresponding to success redirect URL and the web page corresponding to the initial requested URL each in another tab of the browser.

3. A control entity (CE) according to claim 2, wherein the control entity is one of server, a router and a switch.

4. A computer program capable of being implemented within a control entity (CE) for enhancing a captive portal service provided by a control entity (CE) to a communication device (CD), said program comprising instructions which, when the program is loaded and executed within said control entity, carry out the following steps:
after authentication of a user of the communication device, sending (S4) a status page about the captive portal to the communication device for a display of the status page in one tab of the browser, the status page containing a cookie, describing information about a success redirect URL and an initial requested URL, based on the content of which a browser in the communication device sends a request for the success redirect URL and the initial requested URL (S5) for a display of the web page corresponding to success redirect URL and the web page corresponding to the initial requested URL each in another tab of the browser (S6).

## Patentansprüche

1. Verfahren zum Verbessern einer konzerneigenen Portal-Dienstleistung, bereitgestellt von einer Steuerungseinheit (CE) für eine Kommunikationsvorrichtung (CD), umfassend die folgenden Schritte in der Steuerungseinheit (CE):
nach Authentifizierung eines Nutzers der Kommunikationsvorrichtung (CD), Senden (S4) einer Statusseite über das konzerneigene Portal an die Kommunikationsvorrichtung (CD) zum Anzeigen der Statusseite in einem Reiter des Browsers, wobei die Statusseite einen Cookie enthält, der Information beschreibt über eine erfolgreiche Umleit-URL und eine ursprünglich angeforderte URL auf Grundlage des Inhalts, von dem ein Browser in der Kommunikationsvorrichtung (CD) eine Anforderung für die erfolgreiche Umleit-URL und die ursprünglich angeforderte URL (S5) sendet
zum Anzeigen der Webseite, die der erfolgreichen Umleit-URL entspricht, und der Webseite, die der ursprünglich angeforderten URL entspricht, in jeweils einem anderen Reiter des Browsers (S6).

2. Steuerungseinheit (CE) zum Verbessern einer konzerneigenen Portal-Dienstleistung, bereitgestellt von einer Steuerungseinheit (CE) für eine Kommunikationsvorrichtung (CD), umfassend:
Mittel (IS) zum Senden, nach der Authentifizierung eines Nutzers der Kommunikationsvorrichtung, einer Statusseite über das konzerneigene Portal an die Kommunikationsvorrichtung zum Anzeigen der Statusseite in einem Reiter des Browsers, wobei die Statusseite einen Cookie enthält, der Information beschreibt über eine erfolgreiche Umleit-URL und eine ursprünglich angeforderte URL auf Grundlage des Inhalts, von dem ein Browser in der Kommunikationsvorrichtung eine Anforderung für die erfolgreiche Umleit-URL und die ursprünglich angeforderte URL sendet zum Anzeigen der Webseite, die der erfolgreichen Umleit-URL entspricht, und der Webseite, die der ursprünglich angeforderten URL entspricht, in jeweils einem anderen Reiter des Browsers.

3. Steuerungseinheit (CE) nach Anspruch 2, wobei die Steuerungseinheit eine ist aus Server, Router und Schalter.

4. Computerprogramm, betreibbar zum Implementieren in einer Steuerungseinheit (CE) zum Verbessern einer konzerneigenen Portal-Dienstleistung, bereitgestellt von einer Steuerungseinheit (CE) für eine Kommunikationsvorrichtung (CD), wobei besagtes Programm Befehle umfasst, die, wenn das Programm innerhalb besagter Steuerungseinheit geladen und ausgeführt wird, die folgenden Schritte ausführt:
nach Authentifizierung eines Nutzers der Kommunikationsvorrichtung, Senden (S4) einer Statusseite über das konzerneigene Portal an die Kommunikationsvorrichtung zum Anzeigen der Statusseite in einem Reiter des Browsers, wobei die Statusseite einen Cookie enthält, der Information beschreibt über eine erfolgreiche Umleit-URL und eine ursprünglich angeforderte URL auf Grundlage des Inhalts, von dem ein Browser in der Kommunikationsvorrichtung eine Anforderung für die erfolgreiche Umleit-URL und die ursprünglich angeforderte URL (S5) sendet
zum Anzeigen der Webseite, die der erfolgreichen Umleit-URL entspricht, und der Webseite, die der ursprünglich angeforderten URL entspricht, in jeweils einem anderen Reiter des Browsers (S6).

## Revendications

1. Procédé pour améliorer un service de portail captif fourni par une entité de contrôle (CE) à un dispositif de communication (CD), comprenant les étapes suivantes dans l'entité de contrôle (CE) :
après l'authentification d'un utilisateur du dispositif de communication, envoyer (S4) une page d'état sur le portail captif au dispositif de communication pour un affichage de la page d'état dans un onglet du navigateur, la page d'état contenant un cookie, décrivant des informations sur une URL de redirection réussie et une URL demandée initiale, sur la base du contenu dont un navigateur dans le dispositif de communication envoie une requête pour l'URL de redirection réussie et l'URL demandée initiale (S5) pour un affichage de la page Web correspondant à l'URL de redirection réussie et de la page Web correspondant à l'URL demandée initiale chacune dans un autre onglet du navigateur (S6).

2. Entité de contrôle (CE) pour améliorer un service de portail captif fourni par une entité de contrôle (CE) à un dispositif de communication (CD), comprenant :
des moyens (IS) pour envoyer, après l'authentification d'un utilisateur du dispositif de communication, une page d'état sur le portail captif au dispositif de communication pour un affichage de la page d'état dans un onglet du navigateur, la page d'état contenant un cookie, décrivant des informations sur une URL de redirection réussie et une URL demandée initiale, sur la base du contenu dont un navigateur dans le dispositif de communication envoie une requête pour l'URL de redirection réussie et l'URL demandée initiale pour un affichage de la page Web correspondant à l'URL de redirection réussie et de la page Web correspondant à l'URL demandée initiale chacune dans un autre onglet du navigateur.

3. Entité de contrôle (CE) selon la revendication 2, l'entité de contrôle étant l'un parmi un serveur, un routeur et un commutateur.

4. Programme informatique pouvant être mis en oeuvre dans une entité de contrôle (CE) pour améliorer un service de portail captif fourni par une entité de contrôle (CE) à un dispositif de communication (CD), ledit programme comprenant des instructions qui, lorsque le programme est chargé et exécuté dans ladite entité de contrôle, effectuent les étapes suivantes :
après l'authentification d'un utilisateur du dispositif de communication, envoyer (S4) une page d'état sur le portail captif au dispositif de communication pour un affichage de la page d'état dans un onglet du navigateur, la page d'état contenant un cookie, décrivant des informations sur une URL de redirection réussie et une URL demandée initiale, sur la base du contenu dont un navigateur dans le dispositif de communication envoie une requête pour l'URL de redirection réussie et l'URL demandée initiale (S5) pour un affichage de la page Web correspondant à l'URL de redirection réussie et de la page Web correspondant à l'URL demandée initiale chacune dans un autre onglet du navigateur (S6).
